# EUROPEAN PATENT APPLICATION

(11) **EP 4 542 330 A1**
(43) Date of publication of application: **23.04.2025**
(21) Application number: 23220791.0
(22) Date of filing: 29.12.2023
(51) Int. Cl.: G05D 16/06, G05D 16/20

(54) **PRESSURE REGULATING DEVICE**

(30) Priority: 18.10.2023 CN 202322799768 U
(71) Applicant: Ningbo Kingdun Electronic Industry Co., Ltd., Ningbo, Zhejiang 315400 (CN)
(72) Inventor: Liu, Xueyong, Ningbo, Zhejiang, 315400 (CN); Long, Xinglin, Ningbo, Zhejiang, 315400 (CN)
(74) Representative: Petraz, Gilberto Luigi

(57) **Abstract**

A pressure regulating device (100) is provided, including a valve body (10), a gas chamber diaphragm (20), a pressure regulating component (30), a valve core (40), and a transmission mechanism (50). The valve body (10) is provided with an inlet channel (11) and an outlet channel (12). The pressure regulating component (30) is located at a side of the gas chamber diaphragm (20) departing from the valve body (10) and is connected to the valve body (10). The valve core (40) is disposed in a region where the inlet channel (11) is located and is slidably coupled with the valve body (10). The transmission mechanism (50) is located at a side of the gas chamber diaphragm (20) departing from the pressure regulating component (30), and the transmission mechanism (50) includes a cam (51), a piston rod (52), and a lever (53).

## Description

### TECHNICAL FIELD

The present invention generally relates to the field of refrigeration, and in particular, to a pressure regulating device.

### BACKGROUND

Gas regulator is a valve in a gas pipeline, a pressure regulating component in the gas regulator acts on a gas chamber diaphragm to adjust a pressure to play a role in pressure reduction and pressure stabilization. With advancement of gas regulator technology, a gas regulator with a close-off function is developing. When a gas leakage occurs, the gas regulator can receive instructions issued by an alarm, and the gas regulator can drive a transmission mechanism to close off a gas path to achieve the function of gas leakage shutdown.

At present, the pressure regulating component and the transmission mechanism in a conventional gas regulator are usually located at the same side of the gas chamber diaphragm, and the transmission mechanism can drive a lever to push a valve core to block an inlet channel in the gas regulator, to achieve a purpose of closing the gas path. The above transmission mechanism can achieve closure of the gas path. However, when the transmission mechanism drives the lever to rotate, the gas chamber diaphragm would deform with the transmission mechanism. As the gas chamber diaphragm would be subjected to gas pressure when the gas chamber diaphragm deforms, the transmission mechanism needs to overcome resistance brought by the gas chamber diaphragm when the transmission mechanism drives the lever to rotate. In this way, the transmission mechanism needs to provide a larger driving force in order to drive the lever to block the inlet channel when the gas regulator is in operation, so that the gas regulator needs more energy to operate.

### SUMMARY

Based on the above, it is necessary to provide a pressure regulating device capable of solving the above technical problem.

In order to solve the above technical problem, the present invention provides the following technical solution.

A pressure regulating device is applied in a gas channel, configured to regulate a pressure of gas passing through the pressure regulating device, and capable of closing off the gas channel. The pressure regulating device includes a valve body, a gas chamber diaphragm, a pressure regulating component, a valve core, and a transmission mechanism. The valve body is provided with an inlet channel and an outlet channel. The gas chamber diaphragm is mounted in the valve body, a gas chamber is defined by the gas chamber diaphragm and the valve body, and the inlet channel is capable of being in communication with the outlet channel by the gas chamber. The pressure regulating component is located at a side of the gas chamber diaphragm away from the valve body and is connected to the valve body, and a pressure of the pressure regulating component acting on the gas chamber diaphragm is adjustable. The valve core is disposed in a region where the inlet channel is located, and is slidably coupled with the valve body. The transmission mechanism is located at a side of the gas chamber diaphragm away from the pressure regulating component, and the transmission mechanism includes a cam, a piston rod, and a lever. The piston rod is slidably mounted to the valve body and is coupled with the cam in a transmission way, the lever is rotatably mounted to the valve body and is connected to the piston rod and the valve core in a transmission way, respectively, and the piston rod is capable of driving the lever to push the valve core under push of the cam to drive the valve core to seal the inlet channel.

It should be understood that the pressure regulating component and the transmission mechanism are provided on two opposite sides of the gas chamber diaphragm, respectively, and the transmission mechanism is provided independently from the gas chamber diaphragm, so that the piston rod does not need to overcome resistance brought by the gas chamber diaphragm when the piston rod drives the lever to push the valve core to seal the inlet channel under the push of the cam, which is able to reduce driving force required for operation of the transmission mechanism when the pressure regulating device is in operation, resulting in that the pressure regulating device can be suitable for low-voltage startup.

In an embodiment, the transmission mechanism further includes a supporting base and a resilient member, the supporting base is connected to the piston rod, and the cam is capable of pushing the piston rod by the supporting base. The resilient member is provided between the supporting base and the valve body and configured to drive the supporting base to resiliently reset.

In an embodiment, the supporting base is connected to the piston rod by thread.

In an embodiment, the transmission mechanism further includes a sealing sleeve, and the sealing sleeve is at least partially disposed between the piston rod and the valve body and is assembled and sealed with the piston rod and the valve body, respectively.

It should be understood that the piston rod is assembled and sealed with the valve body by the sealing sleeve, so as to ensure a sealing of the assembly between the piston rod and the valve body and to avoid gas leakage in the valve body.

In an embodiment, the sealing sleeve is connected to the valve body by thread, a first sealing ring is assembled between the sealing sleeve and the valve body, and a second sealing ring is assembled between the sealing sleeve and the piston rod.

It should be understood that the sealing sleeve and the valve body are assembled and sealed with a first sealing ring, so as to further ensure sealing of the assembly between the sealing sleeve and the valve body, and prevent gas in the valve body from leaking out. The second sealing ring is provided between the sealing sleeve and the piston rod, so as to further ensure sealing of the assembly between the sealing sleeve and the piston rod, and prevent the gas in the valve body from leaking out.

In an embodiment, the pressure regulating device further includes a detecting mechanism which is capable of detecting a rotation angle of the cam and generating a feedback signal to determine if the valve core and the inlet channel are in communication with each other or out of communication with each other.

It should be understood that a detection mechanism is used to detect the rotation angle of the cam and generate the feedback signal to determine if the valve core and the inlet channel are in communication with each other or out of communication with each other, so that people can intuitively obtain that the inlet channel is in an open state or a closed state, and in this way, it can be easy for people to use the pressure regulating device.

In an embodiment, the detecting mechanism includes a circuit board and a disc, a centerline of rotation of the disc is in the same straight line with a centerline of rotation of the cam, and a signal triggering member is mounted on the disc. The circuit board is integrated with a signaling member, and the signaling member is capable of being cooperated with the signal triggering member and generating the feedback signal.

In an embodiment, the signal triggering member includes a permanent magnet and the signaling member includes two magnetic induction elements. The two magnetic induction elements are spaced apart on the circuit board along a circumferential direction of the disc, and the two magnetic induction elements are capable of being cooperated with the permanent magnet and generating the feedback signal, respectively.

It should be understood that the number of magnetic induction element is two, so that the permanent magnet may trigger the two magnetic induction elements to feed back different signals when the permanent magnet rotates to positions of the two magnetic induction elements under driving of the cam. In this way, people can determine if the valve core and the inlet channel are in communication with each other or out of communication with each other.

In an embodiment, the disc is connected to the cam with a transmission shaft, the pressure regulating device further includes a motor, and the motor is connected to the transmission shaft in a transmission way.

In an embodiment, the pressure regulating device further includes a valve sleeve, the valve sleeve is disposed in the region where the inlet channel is located, and the valve sleeve is connected to the valve body. The lever is rotatably connected to the valve sleeve, the valve core is slidably mounted in the valve sleeve, and the valve core is capable of controlling the valve core (40) and the inlet channel (11) being in communication with each other or out of communication with each other under push of the lever.

Due to application of the above solution, the present invention has following advantages over the related art.

In the pressure regulating device of the present invention, the pressure regulating component and the transmission mechanism are provided on two opposite sides of the gas chamber diaphragm, respectively, and the transmission mechanism is provided independently from the gas chamber diaphragm, so that the piston rod does not need to overcome resistance brought by the gas chamber diaphragm when the piston rod drives the lever to push the valve core to seal the inlet channel under the push of the cam, which is able to reduce driving force required for operation of the transmission mechanism when the pressure regulating device is in operation, resulting in that the pressure regulating device can be suitable for low-voltage startup.

### BRIEF DESCRIPTION OF THE DRAWINGS

In order to more clearly illustrate technical solutions in the embodiments of the present invention or in the conventional technology, the accompanying drawings to be used in the description of the embodiments or the conventional technology will be briefly introduced below, and it would be apparent that the accompanying drawings in the following description are only some of the embodiments of the present invention, and that other accompanying drawings may be available to one skilled in the art based on these drawings without creative labor.
FIG. 1 is a schematic diagram of a pressure regulating device in an embodiment of the present invention.
FIG. 2 is a cross-sectional diagram of a pressure regulating device in an embodiment of the present invention.
FIG. 3 is an enlarged diagram of a part denoted as P of FIG. 2.

In the figures, 100 represents a pressure regulating device, 10 represents a valve body, 11 represents an inlet channel, 12 represents an outlet channel, 13 represents a gas chamber, 20 represents a gas chamber diaphragm, 30 represents a pressure regulating component, 40 represents a valve core, 50 represents a transmission mechanism, 51 represents a cam, 52 represents a piston rod, 53 represents a lever, 54 represents a supporting base, 55 represents a resilient member, 56 represents a sealing sleeve, 57 represents a first sealing ring, 58 represents a second sealing ring, 60 represents a detecting mechanism, 61 represents a circuit board, 611 represents a signaling member, 6111 represents a first magnetic induction element, 6112 represents a second magnetic induction element, 62 represents a disc, 621 represents a signal triggering member, 63 represents a transmission shaft, 70 represents a motor, and 80 represents a valve sleeve.

### DETAILED DESCRIPTION OF THE EMBODIMENT

In order to make the above purposes, features and advantages of the present invention more apparent and understandable, specific embodiments of the present invention are described in detail below in conjunction with the accompanying drawings. Many specific details are set forth in the following description to facilitate a full understanding of the present invention. However, the present invention may be implemented in many other ways different from those described herein, and one skilled in the art may make similar improvements without violating connotations of the present invention, and therefore the present invention is not limited by the specific embodiments disclosed below.

It should be noted that when a component is considered to be "fixed to" or "disposed on" another component, it can be directly fixed to or disposed on another component, or there can be a centered component. When a component is considered to be "connected to" another component, it can be directly connected to another component, or there can be a centered component at the same time. The terms "vertical", "horizontal", "up", "down", "left", "right", and the like, as used in the description of the present invention, are for illustrative purposes only and do not imply a unique embodiment.

Furthermore, the terms "first" and "second" are used for descriptive purposes only and are not to be understood as indicating or implying relative importance or implicitly specifying the number of technical features indicated. Thus, a feature defined with "first" or "second" may expressly or impliedly include at least one such feature. In the description of the present invention, "plurality" means at least two, e.g., two, three, etc., unless otherwise expressly and specifically limited.

In the present invention, unless otherwise expressly specified and limited, the first feature "over" or "under" the second feature may be that the first feature is in direct contact with the second feature, or that the first feature is in indirect contact with the second feature by an intermediate medium. Furthermore, the first feature being "above", "up", and "cover" the second feature may be that the first feature is directly above or diagonally above the second feature, or simply that a horizontal height of the first feature is higher than that of the second feature. The first feature being "below", "under", and "underneath" the second feature may be that the first feature is directly below or diagonally below the second feature, or simply that the horizontal height of the first feature is less than that of the second feature.

Unless otherwise defined, all technical and scientific terms used herein have the same meaning as one skilled in the art would understand. The terminology used in the description of the present invention is for the purpose of describing particular embodiments and is not intended to limit the invention. The term "and/or" as used herein includes any and all combinations of one or more of the associated listed items.

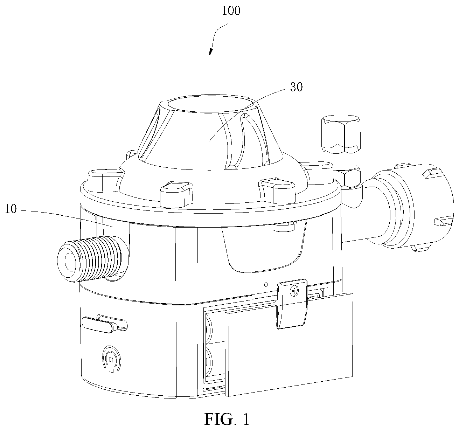

Referring to FIG. 1 to FIG. 3, a pressure regulating device 100 provided in an embodiment of the present invention is applied in a gas channel, configured to regulate a pressure of gas passing through the pressure regulating device 100, and capable of closing off the gas channel. The pressure regulating device 100 includes a valve body 10, a gas chamber diaphragm 20, a pressure regulating component 30, a valve core 40, and a transmission mechanism 50. The valve body 10 is provided with an inlet channel 11 and an outlet channel 12. The gas chamber diaphragm 20 is mounted in the valve body 10, a gas chamber 13 is defined by the gas chamber diaphragm 20 and the valve body 10, and the inlet channel 11 is capable of being in communication with the outlet channel 12 by the gas chamber 13. The pressure regulating component 30 is located at a side of the gas chamber diaphragm 20 away from the valve body 10 and is connected to the valve body 10, and a pressure of the pressure regulating component 30 acting on the gas chamber diaphragm 20 is adjustable. The valve core 40 is disposed in a region where the inlet channel 11 is located, and is slidably coupled with the valve body 10. The transmission mechanism 50 is located at a side of the gas chamber diaphragm 20 away from the pressure regulating component 30, and the transmission mechanism 50 includes a cam 51, a piston rod 52, and a lever 53. The piston rod 52 is slidably mounted to the valve body 10 and is coupled with the cam 51 in a transmission way, the lever 53 is rotatably mounted to the valve body 10 and is connected to the piston rod 52 and the valve core 40 in a transmission way, respectively, and the piston rod 52 is capable of driving the lever 53 to push the valve core 40 under push of the cam 51 to drive the valve core 40 to seal the inlet channel 11.

It should be understood that the pressure regulating component 30 and the transmission mechanism 50 are provided on two opposite sides of the gas chamber diaphragm 20, respectively, and the transmission mechanism 50 is provided independently from the gas chamber diaphragm 20, so that the piston rod 52 does not need to overcome resistance brought by the gas chamber diaphragm 20 when the piston rod 52 drives the lever 53 to push the valve core 40 to seal the inlet channel 11 under the push of the cam 51, which is able to reduce driving force required for operation of the transmission mechanism 50 when the pressure regulating device 100 is in operation, resulting in that the pressure regulating device 100 can be suitable for low-voltage startup.

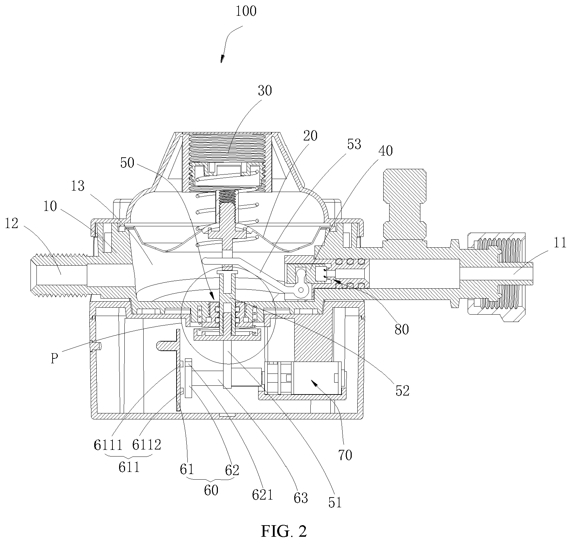

Referring to FIG. 2, the present invention may use the cam 51 to rotate the lever 53 by the piston rod 52, so that the transmission mechanism 50 has a simple structure and is small in size, avoiding restriction of installation space.

It should be noted that it may adopted in a conventional form of a related pressure regulating device that structural composition of the pressure regulating component 30 and how the pressure regulating component 30 acts on the gas chamber diaphragm 20 to adjust the pressure during operation of the pressure regulating component 30, which is not elaborated herein.

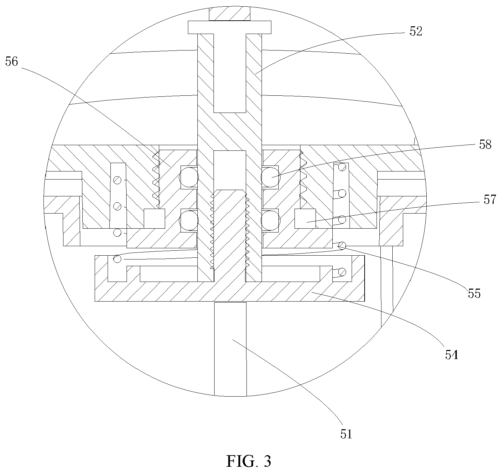

Referring to FIG. 2 and FIG. 3, in some embodiments, the transmission mechanism 50 may further include a supporting base 54 and a resilient member 55, the supporting base 54 is connected to the piston rod 52, and the cam 51 is capable of pushing the piston rod 52 by the supporting base 54. The resilient member 55 is provided between the supporting base 54 and the valve body 10 and configured to drive the supporting base 54 to resiliently reset.

It should be noted that the resilient member 55 may be provided as a spring, and for one skilled in the art, the resilient member 55 may also be provided as other rubber bushings or the like having a high degree of resilience, which is not elaborated herein.

Referring to FIG. 2 and FIG. 3, in some embodiments, the supporting base 54 may be connected to the piston rod 52 by thread.

Referring to FIG. 2 and FIG. 3, in some embodiments, the transmission mechanism 50 may further include a sealing sleeve 56, and the sealing sleeve 56 may be at least partially disposed between the piston rod 52 and the valve body 10 and be assembled and sealed with the piston rod 52 and the valve body 10, respectively. In other words, the piston rod 52 may be assembled and sealed with the valve body 10 by the sealing sleeve 56, so as to ensure a sealing of the assembly between the piston rod 52 and the valve body 10 and to avoid gas leakage in the valve body 10.

Referring to FIG. 2 and FIG. 3, in some embodiments, the sealing sleeve 56 may be connected to the valve body 10 by thread, a first sealing ring 57 may be assembled between the sealing sleeve 56 and the valve body 10, and a second sealing ring 58 may be assembled between the sealing sleeve 56 and the piston rod 52. In other words, the sealing sleeve 56 and the valve body 10 may be assembled and sealed with a first sealing ring 57, so as to further ensure sealing of the assembly between the sealing sleeve 56 and the valve body 10, and prevent gas in the valve body 10 from leaking out. The second sealing ring 58 may be provided between the sealing sleeve 56 and the piston rod 52, so as to further ensure sealing of the assembly between the sealing sleeve 56 and the piston rod 52, and prevent the gas in the valve body 10 from leaking out.

It should be noted that the first sealing ring 57 in the pressure regulating device of the present invention may be provided as a rubber member or a silicone member, so that the first sealing ring 57 as a whole may be deformed under pressure and realize the sealing of the assembly between the sealing sleeve 56 and the valve body 10. The second sealing ring 58 may be provided as a rubber member or a silicone member, so that the second sealing ring 58 as a whole may be deformed under pressure and realize the sealing of the assembly between the sealing sleeve 56 and the piston rod 52.

Referring to FIG. 2, in some embodiments, the pressure regulating device 100 may further include a detection mechanism 60 which is capable of detecting a rotation angle of the cam 51 and generating a feedback signal to determine if the valve core 40 and the inlet channel 11 are in communication with each other or out of communication with each other. In other words, the detection mechanism 60 may detect the rotation angle of the cam 51 and generate the feedback signal to determine if the valve core 40 and the inlet channel 11 are in communication with each other or out of communication with each other, so that people can intuitively obtain that the inlet channel is in an open state or a closed state, and in this way, it can be easy for people to use the pressure regulating device.

Referring to FIG. 2, in some embodiments, the detection mechanism 60 may include a circuit board 61 and a disc 62, a centerline of rotation of the disc 62 may be in the same straight line with a centerline of rotation of the cam 51, and a signal triggering member 621 may be mounted on the disc 62. The circuit board 61 may be integrated with a signaling member 611, and the signaling member 611 is capable of being cooperated with the signal triggering member 621 and generating the feedback signal.

Specifically, the signal triggering member 621 may include a permanent magnet, and the signaling member 611 may include a magnetic induction element.

Exemplarily, the number of the magnetic induction element may be two, and two magnetic induction elements may be spaced apart on the circuit board 61 along a circumferential direction of the disc 62. The two magnetic induction elements may be a first magnetic induction element 6111 and a second magnetic induction element 6112, the first magnetic induction element 6111 is capable of being cooperated with the permanent magnet and generating the feedback signal, and the second magnetic induction element 6112 is capable of being cooperated with the permanent magnet and generating the feedback signal. In other words, in the pressure regulating device 100, the permanent magnet may trigger the two magnetic induction elements to feed back different signals when the permanent magnet rotates to positions of the two magnetic induction elements under driving of the cam 51, so as to determine if the valve core 40 and the inlet channel 11 are in communication with each other or out of communication with each other.

Referring to FIG. 2, in some embodiments, the disc 62 may be connected to the cam 51 with a transmission shaft 63, the pressure regulating device 100 may further include a motor 70, and the motor 70 may be connected to the transmission shaft 63 in a transmission way.

Referring to FIG. 2, in some embodiments, the pressure regulating device 100 may further include a valve sleeve 80, the valve sleeve 80 may be disposed in the region where the inlet channel 11 is located, and the valve sleeve 80 may be connected to the valve body 10. The lever 53 may be rotatably connected to the valve sleeve 80, the valve core 40 may be slidably mounted in the valve sleeve 80, and the valve core 40 is capable of controlling the valve core 40 and the inlet channel 11 being in communication with each other or out of communication with each other.

In summary, in the pressure regulating device 100 of the present invention, the pressure regulating component 30 and the transmission mechanism 50 may be provided on two opposite sides of the gas chamber diaphragm 20, respectively, and the transmission mechanism 50 may be provided independently from the gas chamber diaphragm 20, so that the piston rod 52 does not need to overcome resistance brought by the gas chamber diaphragm 20 when the piston rod 52 drives the lever 53 to push the valve core 40 to seal the inlet channel 11 under the push of the cam 51, which is able to reduce driving force required for operation of the transmission mechanism 50 when the pressure regulating device 100 is in operation, resulting in that the pressure regulating device 100 can be suitable for low-voltage startup.

The technical features of the above-described embodiments may be combined in any combination. For the sake of brevity of description, all possible combinations of the technical features in the above embodiments are not described. However, as long as there is no contradiction between the combinations of these technical features, all should be considered as within the scope of this invention.

The above-described embodiments are merely illustrative of several embodiments of the present invention, and the description thereof is relatively specific and detailed, but is not to be construed as limiting the scope of the invention. It should be noted that a number of variations and modifications may be made by those skilled in the art without departing from the spirit and scope of the invention. Therefore, the scope of the invention should be determined by the appended claims.

## Claims

1. A pressure regulating device, applied in a gas channel, configured to regulate a pressure of gas passing through the pressure regulating device (100), being capable of closing off the gas channel, **characterized by** comprising a valve body (10), a gas chamber diaphragm (20), a pressure regulating component (30), a valve core (40), and a transmission mechanism (50);
wherein the valve body (10) is provided with an inlet channel (11) and an outlet channel (12);
the gas chamber diaphragm (20) is mounted in the valve body (10), a gas chamber (13) is defined by the gas chamber diaphragm (20) and the valve body (10), and the inlet channel (11) is capable of being in communication with the outlet channel (12) by the gas chamber (13);
the pressure regulating component (30) is located at a side of the gas chamber diaphragm (20) away from the valve body (10) and is connected to the valve body (10), and a pressure of the pressure regulating component (30) acting on the gas chamber diaphragm (20) is adjustable;
the valve core (40) is disposed in a region where the inlet channel (11) is located, and is slidably coupled with the valve body (10); and
the transmission mechanism (50) is located at a side of the gas chamber diaphragm (20) away from the pressure regulating component (30), and the transmission mechanism (50) comprises a cam (51), a piston rod (52), and a lever (53); the piston rod (52) is slidably mounted to the valve body (10) and is coupled with the cam (51) in a transmission way, the lever (53) is rotatably mounted to the valve body (10) and is connected to the piston rod (52) and the valve core (40) in a transmission way, respectively, and the piston rod (52) is capable of driving the lever (53) to push the valve core (40) under push of the cam (51) to drive the valve core (40) to seal the inlet channel (11).

2. The pressure regulating device of claim 1, wherein the transmission mechanism (50) further comprises a supporting base (54) and a resilient member (55), the supporting base (54) is connected to the piston rod (52), and the cam (51) is capable of pushing the piston rod (52) by the supporting base (54);
wherein the resilient member (55) is provided between the supporting base (54) and the valve body (10) and configured to drive the supporting base (54) to resiliently reset.

3. The pressure regulating device of claim 2, wherein the supporting base (54) is connected to the piston rod (52) by thread.

4. The pressure regulating device of claim 1, wherein the transmission mechanism (50) further comprises a sealing sleeve (56), and the sealing sleeve (56) is at least partially disposed between the piston rod (52) and the valve body (10) and is assembled and sealed with the piston rod (52) and the valve body (10), respectively.

5. The pressure regulating device of claim 4, wherein the sealing sleeve (56) is connected to the valve body (10) by thread, a first sealing ring (57) is assembled between the sealing sleeve (56) and the valve body (10), and a second sealing ring (58) is assembled between the sealing sleeve (56) and the piston rod (52).

6. The pressure regulating device of claim 1, further comprising a detecting mechanism (60), wherein the detecting mechanism (60) is capable of detecting a rotation angle of the cam (51) and generating a feedback signal to determine if the valve core (40) and the inlet channel (11) are in communication with each other or out of communication with each other.

7. The pressure regulating device of claim 6, wherein the detecting mechanism (60) comprises a circuit board (61) and a disc (62), a centerline of rotation of the disc (62) is in the same straight line with a centerline of rotation of the cam (51), and a signal triggering member (621) is mounted on the disc (62); and
the circuit board (61) is integrated with a signaling member (611), and the signaling member (611) is capable of being cooperated with the signal triggering member (621) and generating the feedback signal.

8. The pressure regulating device of claim 7, wherein the signal triggering member (621) comprises a permanent magnet and the signaling member (611) comprises two magnetic induction elements;
wherein the two magnetic induction elements are spaced apart on the circuit board (61) along a circumferential direction of the disc (62), and the two magnetic induction elements are capable of being cooperated with the permanent magnet and generating the feedback signal, respectively.

9. The pressure regulating device of claim 7, wherein the disc (62) is connected to the cam (51) with a transmission shaft (63); and
the pressure regulating device (100) further comprises a motor (70), and the motor (70) is connected to the transmission shaft (63) in a transmission way.

10. The pressure regulating device of claim 1, further comprising a valve sleeve (80), wherein the valve sleeve (80) is disposed in the region where the inlet channel (11) is located, and the valve sleeve (80) is connected to the valve body (10); and
the lever (53) is rotatably connected to the valve sleeve (80), the valve core (40) is slidably mounted in the valve sleeve (80), and the valve core (40) is capable of controlling the valve core (40) and the inlet channel (11) being in communication with each other or out of communication with each other under push of the lever (53).
